(19) Europäisches Patentamt / European Patent Office / Office européen des brevets

(11) **EP 3 054 291 B1**

(12) **EUROPEAN PATENT SPECIFICATION**

(45) Date of publication and mention
of the grant of the patent:
**30.08.2017  Bulletin 2017/35**

(51) Int Cl.:
***G01N 29/06*** *(2006.01)*   ***G01B 17/00*** *(2006.01)*
***G01N 29/44*** *(2006.01)*   ***G06T 5/50*** *(2006.01)*

(21) Application number: **16162263.4**

(22) Date of filing: **10.05.2011**

(54) **METHOD AND APPARATUS FOR IMAGING A WELDING AREA**

VERFAHREN UND VORRICHTUNG ZUR ABBILDUNG EINES SCHWEISSBEREICHS

PROCÉDÉ ET APPAREIL D'IMAGERIE DE ZONE DE SOUDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.05.2010  JP 2010108771
28.04.2011  JP 2011102435**

(43) Date of publication of application:
**10.08.2016  Bulletin 2016/32**

(62) Document number(s) of the earlier application(s) in
accordance with Art. 76 EPC:
**11780729.7 / 2 570 806**

(73) Proprietor: **JFE Steel Corporation
Tokyo, 100-0011 (JP)**

(72) Inventors:
• **MATSUI, Yutaka
Chiyoda-ku, Tokyo 100-0011 (JP)**
• **IIZUKA, Yukinori
Chiyoda-ku, Tokyo 100-0011 (JP)**
• **TAKADA, Hajime
Chiyoda-ku, Tokyo 100-0011 (JP)**
• **OZEKI, Takafumi
Chiyoda-ku, Tokyo 100-0011 (JP)**

(74) Representative: **Stebbing, Timothy Charles
Haseltine Lake LLP
Lincoln House, 5th Floor
300 High Holborn
London WC1V 7JH (GB)**

(56) References cited:
**EP-A2- 0 834 835      JP-A- 2007 085 949
US-A1- 2008 058 643**

**Description**

[Technical Field]

The present invention relates to a method and apparatus capable of quickly and accurately (or clearly) imaging a welding area (weld microstructure area) in a nondestructive inspection, the method and apparatus being suitable for use in quality evaluation of welding areas of wheels used in automobiles and the like, butt welds of steel plates, fillet welds, and welding areas of steel pipes.

[Background Art]

Examples of methods for checking the quality of a welding area are listed below.

(1) Destructive Inspection

After a sample is cut out of a test object and the cross section is polished, the sample is corroded by an etching agent, observed, and measured.

(2) Indirect Measurement

Examples of methods for evaluating the quality of a welding area of a wheel include an evaluation method disclosed in patent document 1. This method includes the step of determining in advance a relationship between the distribution of external surface temperatures of a rim during welding of a welding area of a wheel and the physical nature (e.g., weld penetration shape, weld penetration depth, and strength) of the welding area; and the step of estimating the physical nature of the welding area of the wheel by measuring the distribution of external surface temperatures of the rim during actual welding of the wheel, and comparing the measured data with the determined relationship between the distribution of external surface temperatures of the rim and the physical nature of the welding area.

(3) Nondestructive Inspection

Patent document 2 discloses a typical method designed for imaging a welding cross-section using ultrasonic waves. Generally, the microstructure of a welding area has grains coarser than those of a base material. Because of the difference in grain size, there is an extremely small difference in acoustic velocity between the microstructure of the welding area and the base material. For example, the ultrasonic frequency is set as high as 20 MHz to 50 MHz. Then, while a cross section orthogonal to a welding direction is being scanned with an ultrasonic beam narrowed (or focused) by an acoustic lens, an array probe or the like, a reflected wave is received and the received signal is subjected to brightness conversion for imaging. This can visualize the form of a bounding surface between the microstructure of the welding area and the base material.

[Citation List]

[Patent Document]

[Patent document 1] Japanese Unexamined Patent Application Publication No. 11-101760
[Patent document 2] Japanese Unexamined Patent Application Publication No. 2008-111742
[Patent document 3] Japanese Unexamined Patent Application Publication No. 2007 085949 A
[Patent document 4] US 2008/058643 A1
[Patent document 5] EP 0 834 835 A2

[Summary of Invention]

[Technical Problem]

However, the conventional quality evaluation methods for evaluating the quality of a welding area suffer the following problems.

(1) Destructive Inspection

Since the product itself cannot be destroyed, a test is performed on a certain number of samples. This is a method for guaranteeing the quality on the assumption that the product is welded under the same welding conditions as those for the tests, and thus, a product-by-product inspection is not performed. The determination of the product quality is time-consuming and costly.

(2) Indirect Measurement (Patent document 1)

Normally, there are variations in the relationship between the distribution of surface temperatures of the test object during welding and the physical nature of the welding area. Therefore, a non-defective product may be determined to be a defective product or, conversely, a defective product may be determined to be a non-defective product.

(3) Nondestructive Inspection (Patent document 2)

The reflected wave from the microstructure of the welding area is very weak. Therefore, the received signal is amplified and subjected to brightness conversion for imaging. Since the focused ultrasonic beam is used here, the reflected wave from the microstructure of the welding area may not be able to be obtained. Additionally, when the received signal is amplified, a signal other than the reflected wave from the microstructure of the welding area, for example, an ultrasonic tailing of a surface-reflected wave or a transmitter pulse, an echo inside an ultrasonic probe and the like are also enhanced. This makes it difficult to obtain a clear image.
Patent document 3 discloses a method in accordance with the preamble of claim 1. Spatial averaging is performed on the plurality of images to improve the signal-to-noise ratio and clarify a displayed image.
Patent documents 4 and 5 concern imaging techniques using tomography for medical diagnostics, in which three-dimensional images are generated by use of maximum intensity projection.
The present invention has been made in view of the problems described above. An object of the present invention is to clearly visualize a microstructure of a welding area in a nondestructive inspection, not in a destructive inspection or indirect measurement.

[Solution to Problem]

A method for imaging a welding area includes scanning a cross section of a test object in a cross direction orthogonal to a welding direction with an ultrasonic beam, and receiving a reflected signal from the inside of the test object while the cross section is being scanned; and imaging the scanned cross section on the basis of the received reflected signal to inspect a microstructure of the welding area, in which a reflected wave from the microstructure of the welding area is enhanced by scanning a cross section of the test object orthogonal to the welding direction with a focused ultrasonic beam at a plurality of different positions in the welding direction, and imaging the scanned cross sections on the basis of the resulting ultrasonic received signals, characterised by in the imaging, enhancing the reflected wave from the microstructure of the welding area by subtracting a moving average waveform Ra from a received and digitized signal waveform Rb, extracting the reflected signal from the microstructure of the welding area and amplifying only the extracted reflected signal, and by using the extracted reflected signal, superimposing a plurality of images obtained by scanning at the plurality of positions in the welding direction, and retaining a maximal value of superimposed pixels to generate an output image:

$$B(x,y) = Max\{Bs(x,y); s=1\sim n\}$$

where n is the number of images obtained by scanning at the plurality of positions in the welding direction, and a brightness value at a given position (x,y) in image Bn is expressed as Bn(x,y), where x is a position in the cross direction and y is a position in the depth direction. Thus, the present invention solves the problems described above.
The present invention provides an apparatus for imaging a welding area. The apparatus is configured to scan a cross section of a test object in a cross direction orthogonal to a welding direction with an ultrasonic beam, receive a reflected signal from the inside of the test object while the cross section is being scanned, and image the scanned cross section on the basis of the received reflected signal to inspect a microstructure of the welding area. The apparatus comprises means for enhancing a reflected wave from the microstructure of the welding area by scanning a cross section of the test object orthogonal to the welding direction with a focused ultrasonic beam at a plurality of different positions in the welding direction, and imaging the scanned cross sections on the basis of the resulting ultrasonic received signals,

characterised in that the means for enhancing are arranged to enhance the reflected wave from the microstructure of the welding area by subtracting a moving average waveform Ra from a received and digitized signal waveform Rb, extracting the reflected signal from the microstructure of the welding area and amplifying only the extracted reflected signal, and to use the extracted reflected signal to superimpose a plurality of images obtained by scanning at the plurality of positions in the welding direction, and retain a maximal value of superimposed pixels to generate an output image:

$$B(x,y) = Max\{Bs(x,y); \; s=1\sim n\}$$

where n is the number of images obtained by scanning at the plurality of positions in the welding direction, and a brightness value at a given position (x,y) in image Bn is expressed as Bn(x,y), where x is a position in the cross direction and y is a position in the depth direction.

[Advantageous Effects of Invention]

In a conventional technique, when brightness is amplified to clarify an imaged cross-section form, a signal (noise) other than a signal to be enhanced is also amplified. This makes it difficult to obtain a clear image. For example, when brightness is amplified to display a clearer form, there is a problem that an ultrasonic tailing of a surface-reflected wave or a transmitter pulse and an echo inside a probe are also enhanced. Additionally, there is a problem that a focused ultrasonic beam tends to be affected by the microstructure form of a welding area, and causes a "darkness area" to appear in part of the image. Here, the term "darkness area" refers to a blurry part of the image.
In the present invention, a "darkness area" in the microstructure form of the welding area can be reduced and clearer visualization can be realized by superimposing images obtained at a plurality of points along the length of a weld line, comparing amplitudes of superimposed pixels, and extracting a maximal pixel value.

[Brief Description of Drawings]

The present invention relates mainly to a maximal-brightness extraction technique described with respect to Figures 1 and 5 to 15. The remaining Figures illustrate features of embodiments or features which are useful for understanding the invention.

[Fig. 1] Fig. 1 is a perspective view, including a block diagram, illustrating an embodiment of the present invention.
[Fig. 2] Fig. 2 illustrates an example of synchronous addition processing in the embodiment.
[Fig. 3] Fig. 3 illustrates an operation image of a rectangular-pulse-signal converter in the embodiment.
[Fig. 4] Fig. 4 illustrates a principle for obtaining reflection from a boundary between a microstructure of a welding area and a base material in the present invention.
[Fig. 5] Fig. 5 illustrates processing to subtract a moving average signal in the embodiment.
[Fig. 6] Fig. 6 illustrates an effect of processing to subtract a moving average signal in the embodiment.
[Fig. 7] Fig. 7 illustrates necessity of maximal-brightness extraction processing in the present invention.
[Fig. 8] Fig. 8 illustrates maximal-brightness extraction processing in the embodiment.
[Fig. 9] Fig. 9 illustrates a method for storing a measured waveform in a memory in the embodiment.
[Fig. 10] Fig. 10 illustrates image translation in the maximal-brightness extraction processing.
[Fig. 11] Fig. 11 illustrates examples of images before maximal-brightness extraction processing.
[Fig. 12] Fig. 12 illustrates an effect of maximal-brightness extraction processing.
[Fig. 13] Fig. 13 is a flow chart illustrating an overall procedure of an imaging method in an example of the present invention.
[Fig. 14] Fig. 14 illustrates examples of a method for imaging one cross section and a result of the imaging in the example of the present invention.
[Fig. 15] Fig. 15 illustrates an example of maximal-brightness extraction processing in the example of the present invention.

[Description of Embodiments]

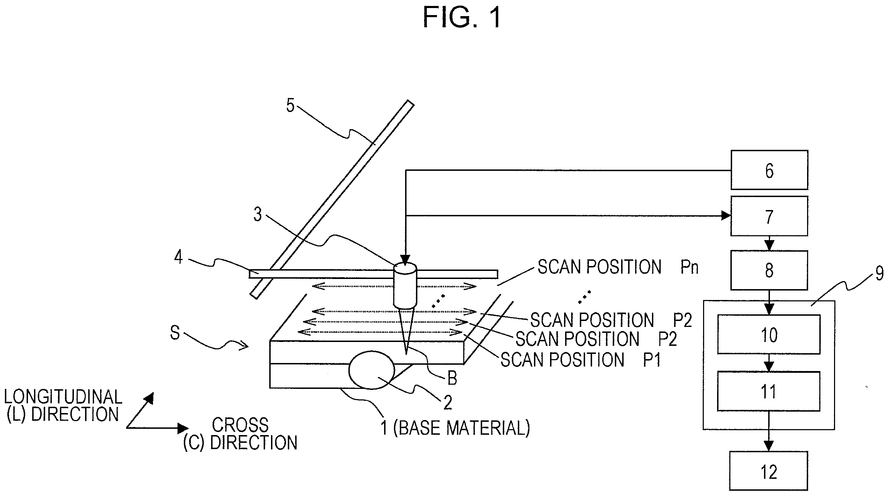

An embodiment for carrying out the present invention will be described with reference to Fig. 1. In Fig. 1, reference letter S denotes a test object, reference numeral 1 denotes a base material, reference numeral 2 denotes a microstructure of a welding area, reference numeral 3 denotes an ultrasonic probe, reference letter B denotes an ultrasonic beam (hereinafter also referred to simply as a beam), reference numeral 4 denotes a C-direction (i.e., a cross direction of the test object) scanning means, reference numeral 5 denotes an L-direction (i.e., a longitudinal direction of the test object) scanning means, reference numeral 6 denotes an ultrasonic transmitting means, reference numeral 7 denotes an ultrasonic receiving means, reference numeral 8 denotes an analog/digital (A/D) converter, reference numeral 9 denotes a signal processor, reference numeral 10 denotes a moving-average-waveform subtracter, reference numeral 11 denotes a maximal brightness extractor, and reference numeral 12 denotes an output part.

While the ultrasonic probe 3 is being moved by the C-direction scanning means 4 to scan the test object S, the ultrasonic transmitting means 6 drives a transducer of the ultrasonic probe 3 every predetermined measurement pitch D (mm) to transmit an ultrasonic wave to the test object S. An ultrasonic signal reflected from the test object S is received by the ultrasonic receiving means 7, subjected to discretization by the A/D converter 8, and repeatedly input to the signal processor 9. An acoustic coupling method used here may be any of a full immersion method, a local immersion method, a contact method, and a method using thin films.

A reflected wave received by the ultrasonic probe 3 is subjected to initial amplification, main amplification, and filtering by the ultrasonic receiving means 7. The resulting analog signal is subjected to discretization by the A/D converter 8 and sent to the signal processor 9.

A reflected wave from the microstructure of the welding area 2 of the test object S is much weaker than a reflected signal captured by typical flaw detection. To improve the signal-to-noise ratio with respect to electrical noise, it is preferable that synchronous addition processing be performed before and after discretization. An example of the synchronous addition processing will now be described.

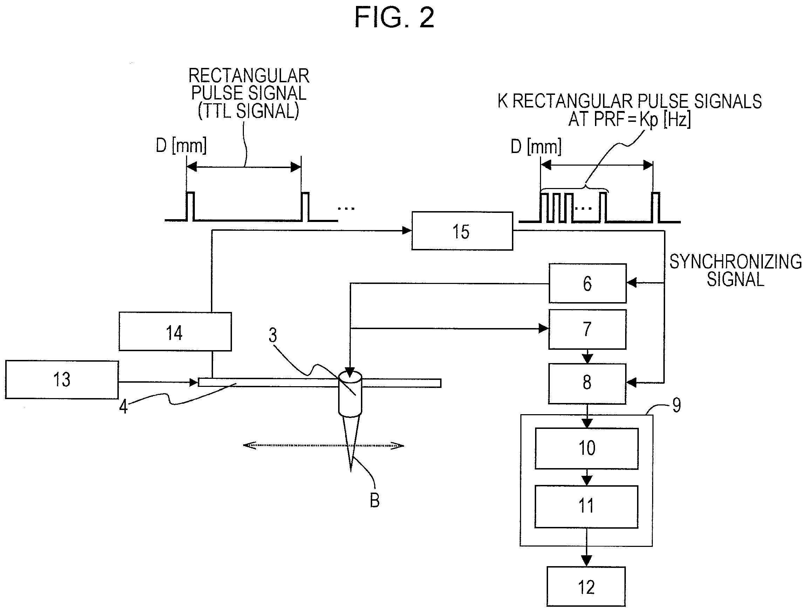

Fig. 2 illustrates an example of synchronous addition processing. In Fig. 2, reference numeral 13 denotes a C-direction scanning means controller that controls the C-direction scanning means 4 such that the ultrasonic probe scans in the C-direction, reference numeral 14 denotes a C-direction position detecting means that detects the position of the ultrasonic probe 3 in the C-direction and outputs a pulse signal every predetermined distance D (mm), reference numeral 15 denotes a rectangular-pulse-signal converter that converts a pulse signal input from the C-direction position detecting means 14 and outputs the resulting pulse signal.

The C-direction scanning means controller 13 controls the C-direction scanning means 4 to cause the ultrasonic probe 3 to scan. Here, the maximum scan speed of the C-direction scanning means 4 is Vm (mm/second), the scan pitch is D (mm), and the number of times of synchronous addition processing is K (points). The C-direction position detecting means 14 is set in advance such that a rectangular pulse signal (e.g., transistor-transistor logic (TTL) level signal) is output every scan pitch D (mm). When the C-direction scanning means 4 causes the ultrasonic probe 3 to scan, a rectangular pulse signal is output every scan pitch D (mm) and input to the rectangular-pulse-signal converter 15. Here, the scan pitch D (mm) is a measurement spatial resolution.

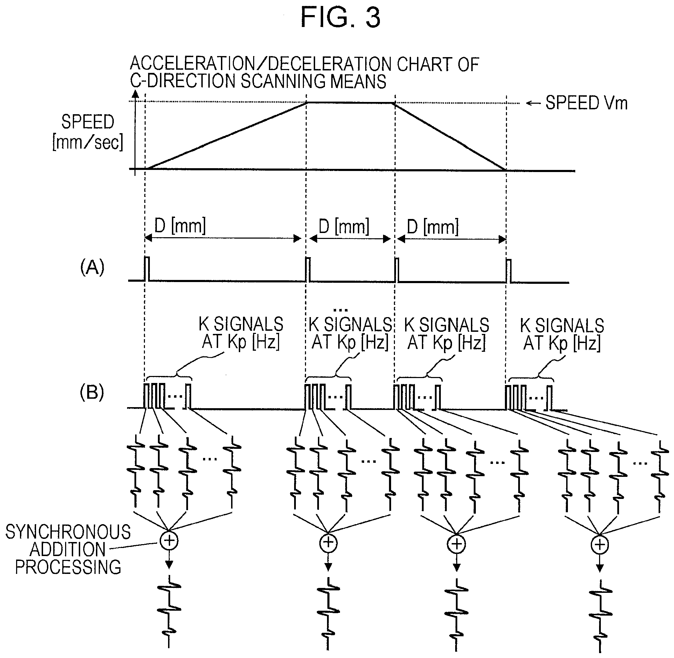

Fig. 3 illustrates an operation image of the rectangular-pulse-signal converter 15. In Fig. 3, (A) illustrates a signal input to the rectangular-pulse-signal converter 15, and (B) illustrates a signal output from the rectangular-pulse-signal converter 15. As illustrated in Fig. 3, in synchronization with a pulse signal input to the rectangular-pulse-signal converter 15 every D (mm), a rectangular pulse signal is output K times at a repeated transmitted and received frequency (PRF) Kp (Hz) expressed by the following equation:

$$Kp = Vm \times (1/D) \times K \ldots (1)$$

A rectangular pulse signal is output K times every predetermined D (mm). In synchronization with this pulse, an ultrasonic wave is transmitted and received. K received signals are obtained and subjected to synchronous addition processing by the number of times of synchronous addition processing K (points). Thus, regardless of whether the C-direction scanning means 4 is accelerated or decelerated, a synchronous-addition-processed received signal can be obtained every predetermined D (mm).

The synchronous addition processing may be performed by the signal processor 9 after discretization in the A/D converter 8 illustrated in Fig. 1 and Fig. 2, or may be performed by dedicated hardware. In the latter case, the resulting D/A-converted output may be input to the A/D converter 8. This procedure may be variously modified without departing from the scope of the present invention as defined by the appended claims.

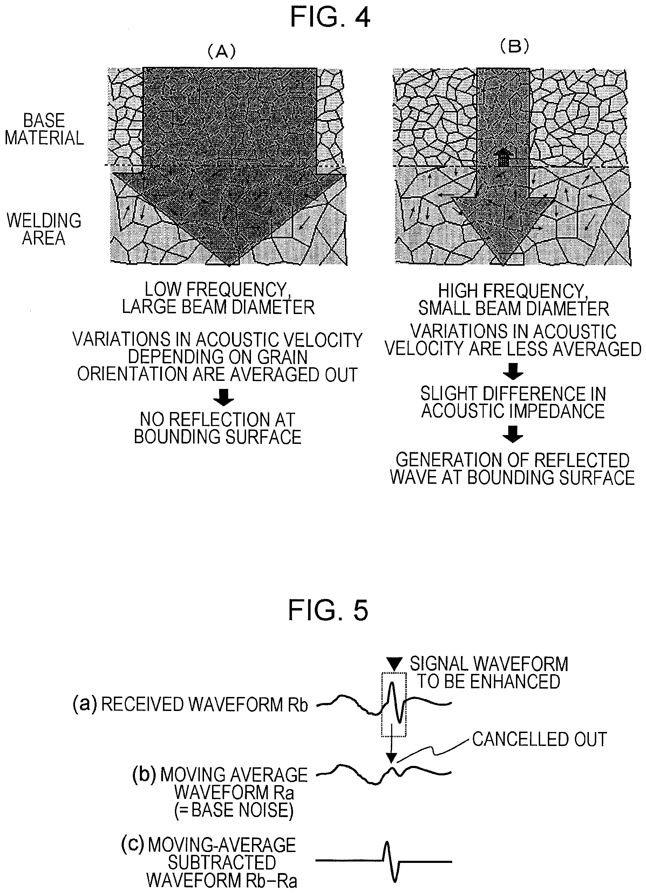

When an ultrasonic wave is transmitted and received during scanning in the C-direction, the beam size of the transmitted ultrasonic wave is preferably small. Fig. 4 illustrates a mechanism for obtaining an ultrasonic wave reflected from a boundary between a base material and a microstructure of a welding area.

The microstructure of the welding area 2 has grains coarser than those of the base material 1, and the acoustic velocity varies from one grain to another. If the beam size is large, variations in acoustic velocity depending on the grain orientation are averaged out, as illustrated in Fig. 4(A). As a result, since there is little difference in acoustic velocity between the base material 1 and the welding area 2, a reflected wave from the bounding surface cannot be easily obtained. On the other hand, if the beam size is small, there is less impact of averaging of acoustic velocities, as illustrated in Fig. 4(B). Since there is a slight difference in acoustic velocity between the welding area 2 and the base material 1, a reflected wave can be obtained more easily than when the beam size is large. Therefore, the beam size of the ultrasonic beam B is preferably small and is preferably narrowed to an average grain diameter of the microstructure of the welding area 2. Specifically, a preferable beam size for rim welding in a wheel is about 70 $\mu$m to 100 $\mu$m, and a preferable beam size for a UOE steel pipe and an electric resistance welded pipe is about 300 $\mu$m to 1000 $\mu$m. As a means for transmitting an ultrasonic beam having a small beam size, either a probe including a single transducer or an array probe including a plurality of transducers one-dimensionally or two-dimensionally arranged may be used as the ultrasonic probe 3. When a probe including a single transducer is used, the transmission frequency is set as high as about 50 MHz and an ultrasonic beam is focused by an acoustic lens. When an array probe is used, the transmission frequency is set to be high, as in the case of using a probe including a single transducer, and an ultrasonic beam is focused by controlling the transmitting timing of each transducer.

The ultrasonic transmitting means 6 drives the transducer of the ultrasonic probe 3 to transmit an ultrasonic wave to the test object S. A reflected wave obtained from the microstructure of the welding area 2 is a very weak signal. To ensure an S/N ratio with respect to electrical noise, it is preferable that the transmission voltage of an ultrasonic beam be 200 V to 300 V or more.

A signal discretized by the A/D converter 8 illustrated in Fig. 1 and Fig. 2 is sent to the moving-average-waveform subtractor 10. If the amplitude of the waveform discretized by the A/D converter 8 is amplified without change and subjected to brightness conversion, an echo other than the reflected echo from the microstructure of the welding area 2, for example, a low-frequency base noise such as, an ultrasonic tailing of a T-pulse or an S-echo and an echo noise inside the ultrasonic probe, are amplified at the same time. As a result, it is not possible to obtain a clear image. Here, the T-pulse is a transmission pulse in a contact method, and the "S-echo" is a reflected echo from the surface of the test object in an immersion method.

As illustrated in Fig. 5, the moving-average-waveform subtractor 10 of Fig. 1 and Fig. 2 extracts only base noise from the received A/D-converted waveform, subtracts the base noise from the waveform shape, and then performs amplification. This can enhance only the reflected wave from the inside of the test object S. The average score m of the waveform is preferably a value obtained by the following equation:

$$m = Pt \times Sp \quad ... \ (2)$$

where Pt (seconds) is a length of one wavelength of a transmission waveform pulse, and Sp (Hz) is a sampling frequency of discrete values.

The length Pt of one wavelength of a transmission pulse is determined from a waveform shape which is obtained by measuring, in advance, a bottom echo of the test object S. If, in an immersion method (including a full immersion method, a local immersion method, and a water column method), there is no need to consider the frequency attenuation caused by the microstructure of the test object S, the length of one wavelength may be measured using a surface-reflected wave of the test object S and determined from the resulting waveform. Alternatively, after imaging, any reflection waveform to be enhanced may be selected, and Pt may be determined from the shape of the selected waveform.

If a moving-average method is performed only for the length of one wavelength of a frequency to be enhanced, only a transmission waveform pulse or a waveform of an extracted frequency component is cancelled out and only base noise can be extracted, as illustrated in Fig. 5. The base noise can be removed by subtracting the base noise from the original signal. Therefore, by carrying out processing to subtract a moving average waveform, it is possible to amplify only the reflected echo from the microstructure of the welding area 2 without enhancing the base noise. The processing to subtract a moving average waveform may be performed all at once after an ultrasonic waveform corresponding to one cross section is received, or may be performed each time an ultrasonic wave is transmitted and received during scanning.

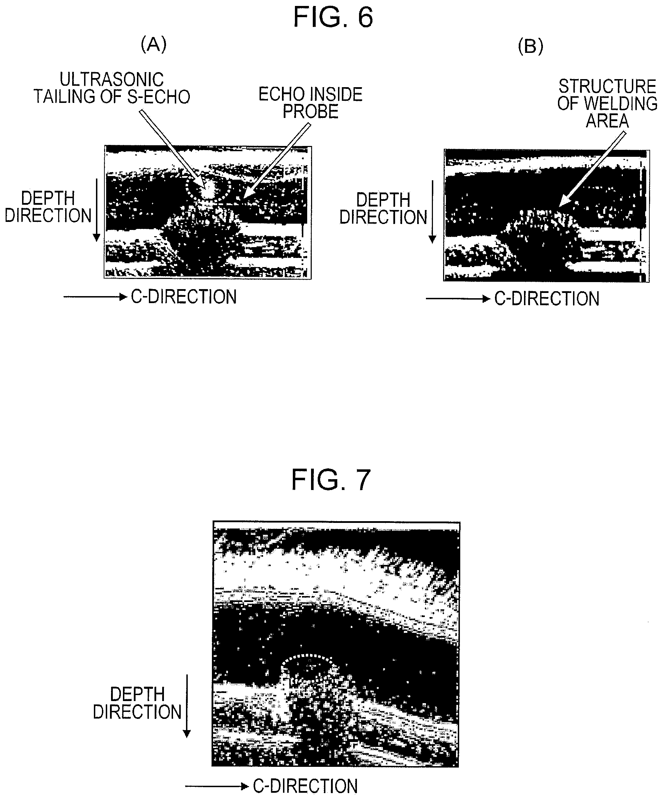

Fig. 6 illustrates an effect of processing to subtract a moving average waveform. Fig. 6 shows an example, in which a weld in the rim of a wheel is imaged using an ultrasonic beam having a frequency of 50 MHz and an ultrasonic beam size of about 70 $\mu$m near the focus. Here, the ultrasonic probe is attached to a scanner capable of X-Y scanning. During scanning in the C-direction, an ultrasonic wave is transmitted and received. The received signal is discretized by the A/D converter, input to a calculator, subjected to brightness conversion, and displayed. Fig. 6(A) illustrates an example before processing to subtract a moving average waveform is performed. Fig. 6(B) illustrates an example in which processing to subtract a moving average waveform is performed on the example of Fig. 6(A). The A/D converter performs sampling at 500 MHz. A waveform used in the processing to subtract a moving average waveform is calculated using equation (2) on the assumption that m = 10 points, so that only a frequency component of 50 MHz can be left.

Fig. 6(A) shows that a slowly varying component is amplified as well as reflection from the microstructure of the welding area 2. However, Fig. 6(B) where the present invention is carried out shows that a slowly varying component is removed and the microstructure of the welding area 2 is clearly imaged.

The maximal brightness extractor 11 illustrated in Fig. 1 and Fig. 2 will now be described. When the amplitude of an ultrasonic reflection waveform is subjected to brightness conversion to image a cross-section form, a "darkness area" (surrounded by a dotted line in Fig. 7) may appear in part of the image, as in the example of Fig. 7. To solve this, maximal-brightness extraction processing is performed.

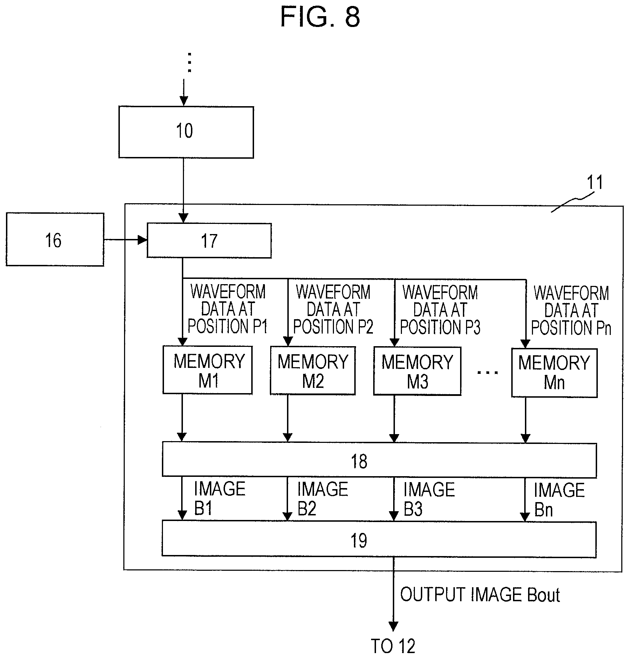

The maximal-brightness extraction processing will be described mainly with reference to Fig. 1 and Fig. 8. Fig. 8 illustrates the maximal brightness extractor 11 of Fig. 1 and Fig. 2 in detail. Reference numeral 16 denotes a controller that controls the L-direction scanning means 5, reference numeral 17 denotes a memory controller, reference numeral 18 denotes an image converter, and reference numeral 19 denotes a maximal brightness calculator.

Referring to Fig. 1, while the C-direction scanning means 4 is moving the ultrasonic probe 3 to scan at position P1, an ultrasonic wave is transmitted and received. The received signal is subjected to discretization by the A/D converter 8, sent to the signal processor 9, subjected to preprocessing such as synchronous addition processing and processing to subtract a moving average waveform, and stored in one of memories M1 to Mn in the maximal brightness extractor 11. The memory controller 17 obtains, from the L-direction scanning means controller 16, information about a position measured with an ultrasonic wave. If the received signal is one measured at position P1, the memory controller 17 stores the received signal in memory M1. If the received signal is one measured at position P2, the memory controller 17 stores the received signal in memory M2. Thus, the memory controller 17 stores the received signal measured at position Pn in memory Mn.

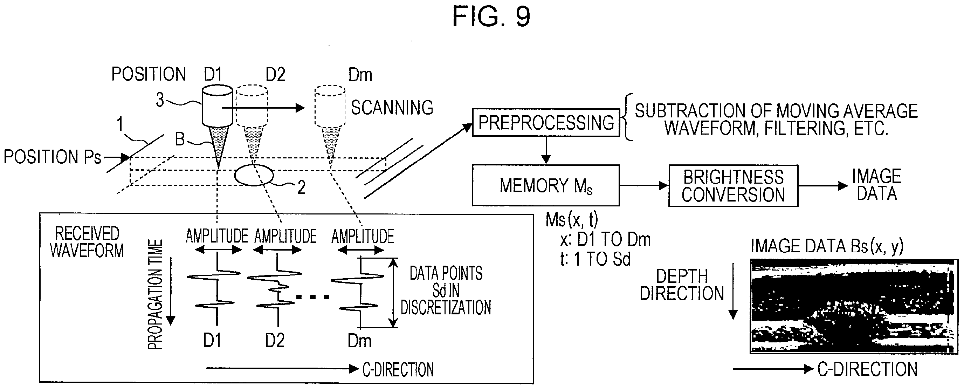

A method for storing a waveform measured at position Ps in memory Ms will now be described with reference to Fig. 9. In Fig. 9, reference characters D1 to Dm each denote a position in the C-direction at which a waveform is measured. In the example of Fig. 9, a waveform is measured at m points in the C-direction. In this case, each waveform is discretized by the A/D converter 8, subjected to preprocessing such as the processing to subtract a moving average waveform described above, and stored in memory Ms. The A/D converter 8 discretizes the waveform into Sd points. Memory Ms is a two-dimensional matrix. Memories M1 to Mn each have a two-dimensional structure. Hereinafter, a discretized value corresponding to position Ps, position D in the C-direction, and t in the propagation time direction of the waveform will be expressed as $Ms(x,t)$.

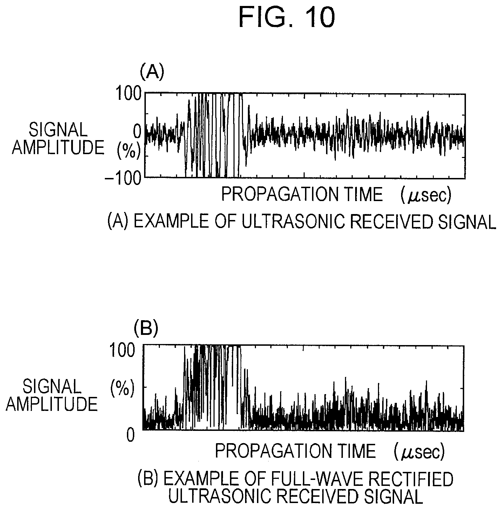

As illustrated in Fig. 8, waveform data stored in memories M1 to Mn is converted by the image converter 18 to image data B1 to Bn. As illustrated in Fig. 9(A), an ultrasonic received signal and an ultrasonic received signal subjected to preprocessing, such as synchronous addition processing and processing to subtract a moving average waveform, have a waveform shape with positive and negative amplitudes. To convert an ultrasonic received signal to an image, the image converter 18 performs full-wave rectification on a waveform having positive and negative amplitudes as illustrated in Fig. 10(A). Thus, as illustrated in Fig. 10(B), the waveform is once converted to one whose negative amplitudes are reversed to positive amplitudes. Then, brightness values are assigned to the amplitudes of the full-wave rectified waveform. The assignment relationship is expressed by the following equation.

$$Bn(x, y) = \begin{cases} Mn(x,t) & (Mn(x,t) \geq 0) \\ -Mn(x,t) & (Mn(x,t) < 0) \end{cases} \quad \dots \ (3)$$

This operation is repeatedly performed on all waveforms obtained by scanning in the C-direction and stored in the memories, so that an image is generated from the ultrasonic waveforms. Hereinafter, a brightness value at a given position $(x,y)$ in image Bn will be expressed as $Bn(x,y)$, where x is a position in the C-direction and y is a position in the depth direction.

In generated images B1 to Bn, superimposed and corresponding pixel data are compared to extract a maximal brightness value using the following equation, and output image B is generated:

$$B(x,y) = Max\{Bs(x,y); \ s=1 \sim n\} \ \dots \ (4)$$

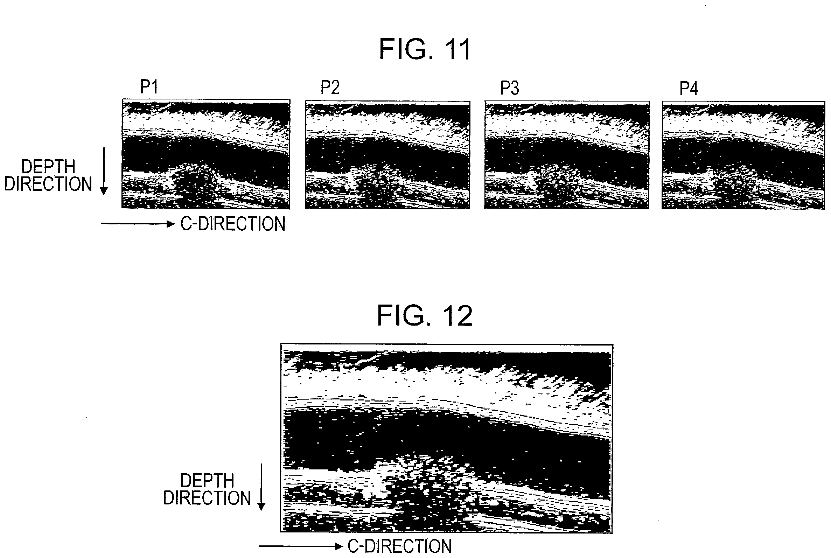

Fig. 11 illustrates images used in maximal-brightness extraction processing. At each of positions P1, P2, P3, and P4 spaced every 0.5 mm in the longitudinal direction, an ultrasonic wave is transmitted and received with a 0.1 mm pitch by the probe 3 which is capable of transmitting the ultrasonic beam B having a beam diameter of about 70 μm near the focus at a frequency of 50 MHz. After A/D-converted, the ultrasonic wave is subjected to processing to subtract a moving average waveform and full-wave rectification. Then, the resulting signal amplitude is subjected to brightness conversion to generate each of the images illustrated in Fig. 11. The image illustrated in Fig. 12 is obtained by extracting maximal brightness values from the four images for P1, P2, P3, and P4. As compared to each of the images illustrated in Fig. 11, the image illustrated in Fig. 12 can more clearly visualize the microstructure of the welding area 2. The effect of maximal-brightness extraction processing can thus be ascertained.

The method for transmitting and receiving an ultrasonic wave may not be limited to a straight beam technique, but be applicable to an angle beam technique and a tandem probe method.

The present invention is applicable not only to welding areas of wheels, but also to butt welds of steel plates, fillet welds, welding areas of steel pipes and the like, as well.

[Examples]

The imaging according to the present invention was performed on a microstructure form of a welding area of a UOE steel pipe using a tandem probe method.

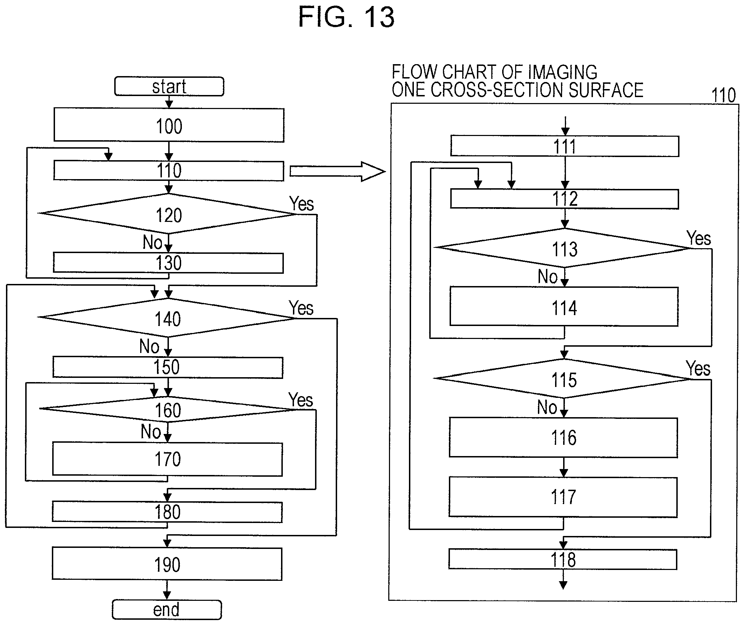

Fig. 13 is an overall flow chart of an imaging method according to the present example. During scanning in the pipe axis direction, beam scanning and imaging at one cross section are performed multiple times. The resulting multiple images of one cross section are synthesized by maximal-brightness extraction processing to form an image of the welding area.

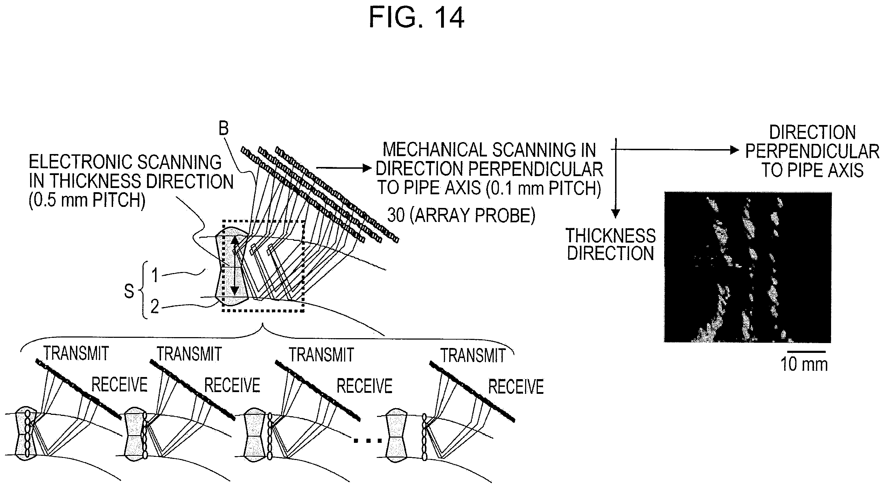

Specifically, in step 100 shown in the left part of Fig. 13, a probe 30 is adjusted to a scan start position in the pipe axis direction (perpendicular to the plane of Fig. 14).

In step 110, imaging of one cross section is executed. Specifically, as shown in step 111 in the right part of Fig. 13, the beam B is adjusted to the scan start position (in the left part of Fig. 14).

Next, in step 112, measurement is performed using the tandem probe method.

In step 113, a determination is made as to whether scanning in the thickness direction has been completed. If not completed, the process proceeds to step 114 where the beam is moved (in electronic scanning) by one pitch (e.g., 0.5 mm) in the thickness direction by changing the array setting of the probe 30. Then, the process proceeds to step 112.

If the result in step 113 is positive and it is determined that the scanning in the thickness direction has been completed, the process proceeds to step 115 where a determination is made as to whether the scanning in the direction perpendicular to the pipe axis (i.e., in the right and left direction in Fig. 14) has been completed. If the result in step 115 is negative, the process proceeds to step 116 where the beam B is moved (in mechanical scanning) by one pitch (e.g., 0.1 mm) in the direction perpendicular to the pipe axis. The process proceeds to step 117 where the beam B is adjusted to a scan start position in the thickness direction (e.g., a surface position of the test object S). The process then returns to step 112.

If the result in step 115 is positive and it is determined that the scanning in the direction perpendicular to the pipe axis has been completed, the process proceeds to step 118 where an image of one cross section is generated from the measurement result. The imaging of one cross section thus ends.

After imaging of one cross section in step 110 is executed by repeating steps 111 to 118, the process proceeds to step 120 in the left part of Fig. 13. In step 120, a determination is made as to whether scanning in the pipe axis direction has been completed. If the result in step 120 is negative, the process proceeds to step 130 where the probe 30 is moved by one pitch (e.g., 10 mm) in the pipe axis direction. Then, the process returns to step 110 where imaging at the next cross section is executed.

If the result in step 120 is positive and it is determined that the scanning in the pipe axis direction has been completed, the process proceeds to step 140 where a determination is made as to whether generation of a maximal-brightness-extraction processed image has been completed. If the result in step 140 is negative, the process proceeds to step 150 where one point in an imaging region is specified. Then, in step 160, a determination is made as to whether reading of brightness values has been completed for all images.

If the result in step 160 is negative, the process proceeds to step 170 where a brightness value of a pixel corresponding to the specified point is read from the obtained image. Then, the process returns to step 160.

On the other hand, if the result in step 160 is positive and it is determined that reading of brightness values has been completed for all images, the process proceeds to step 180 where a maximal brightness value is extracted from all brightness values obtained. Then, the process returns to step 140.

If the result in step 140 is positive and it is determined that generation of a maximal-brightness-extraction processed image has been completed, the process proceeds to step 190 where maximal brightness values obtained are synthesized to generate an image. The process ends here.

Fig. 14 illustrates a method for imaging one cross section and a result of the imaging in the present example. Measurement is performed by an immersion method using the array probe 30 with a frequency of 10 MHz. The array probe 30 performs delay time control of array elements and focuses transmission and reception beams having a beam diameter of about 1 mm with an acoustic lens. The scanning with the ultrasonic beam B is done by electronic scanning in the thickness direction and by mechanical scanning in the direction perpendicular to the pipe axis. In the electronic scanning, the array probe 30 selects a transmitting/receiving transducer and performs delay time control of array elements.

**EP 3 054 291 B1**

In this method, measurement is performed while beam scanning is being performed with a 0.5 mm pitch in the thickness direction and with a 0.1 mm pitch in the direction perpendicular to the pipe axis. Then, imaging is performed on the basis of a detected reflected signal. The measuring object is a welding area of a UOE steel pipe with a thickness of 38 mm. The imaging range extends from the outer surface to the inner surface in the thickness direction, and is within 50 mm of the welding area in the direction perpendicular to the pipe axis.

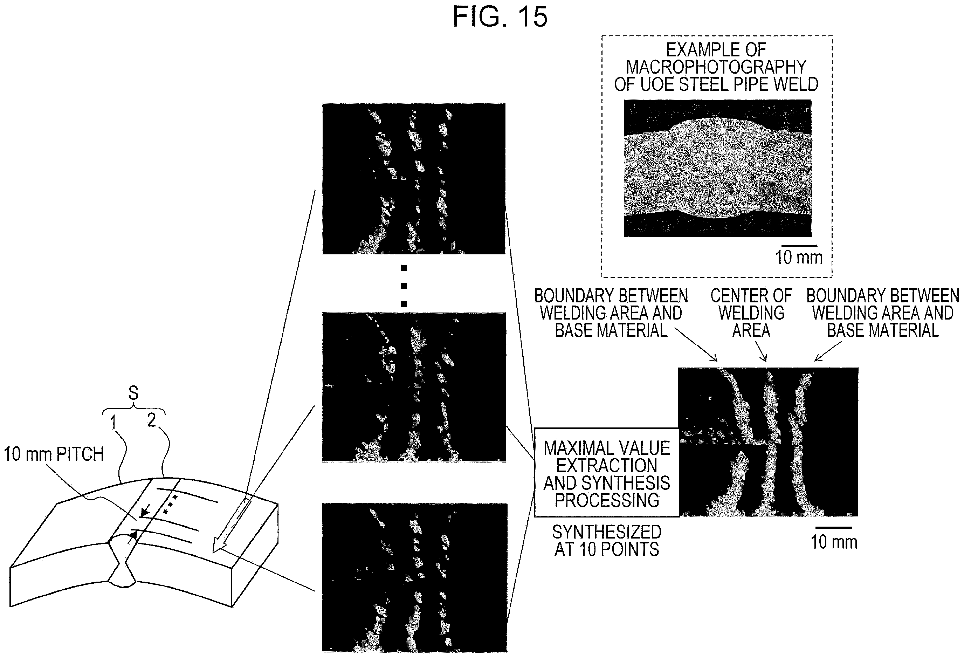

Fig. 15 illustrates maximal-brightness extraction processing in the present example. Imaging of one cross section according to the method illustrated in Fig. 14 is executed 10 times with a 10 mm moving pitch in the pipe axis direction. Then, from the resulting 10 cross section images, maximal brightness values are extracted and synthesized to generate an image. Thus, even if a signal cannot be obtained at every point along the boundary of the welding area by performing imaging once, the entire boundary of the welding area can be imaged. For comparison, Fig. 15 illustrates a macrophotography of a cross section of a welding area of a UOE steel pipe. A comparison with the macrophotography shows that in the present example, the boundary between the welding area of the UOE steel pipe and the base material and the center of the welding area (where the orientation of the welding microstructure is changed) can be imaged.

[Reference Signs List]

S: test object
1: base material
2: welding area
3: ultrasonic probe
B: ultrasonic beam
4: C-direction scanning means
5: L-direction scanning means
6: ultrasonic transmitting means
7: ultrasonic receiving means
8: A/D converter
9: signal processor
10: moving-average-waveform subtractor
11: maximal brightness extractor
12: output part
13: C-direction scanning means controller
14: C-direction position detecting means
15: rectangular-pulse-signal converter
16: L-direction scanning means controller
17: memory controller
18: image converter
19: maximal brightness calculator
30: array probe
P1, P2, ...Ps ...Pn: scan position
D: scan pitch
○: synchronous addition processing
Rb: received waveform
Ra: moving average waveform
Rb-Ra: moving-average-waveform subtracted waveform
M1, M2, M3, ...Ms ...Mn: memory
D1, D2, ......Dm: position
B1, B2, B3, ...Bn ...Bs (x, y) : image data

**Claims**

1.  A method for imaging a welding area (2), the method comprising:

    scanning a cross section of a test object (S) in a cross direction (C) orthogonal to a welding direction (L) with an ultrasonic beam (B), and receiving a reflected signal from the inside of the test object (S) while the cross section is being scanned; and

9

imaging the scanned cross section on the basis of the received reflected signal to inspect a microstructure of the welding area (2),

wherein a reflected wave from the microstructure of the welding area (2) is enhanced by scanning a cross section of the test object (S) orthogonal to the welding direction (L) with a focused ultrasonic beam (B) at a plurality of different positions (P1, P2, ...Pn) in the welding direction (L), and imaging the scanned cross sections on the basis of the resulting ultrasonic received signals,

**characterised by** in the imaging, enhancing the reflected wave from the microstructure of the welding area by subtracting a moving average waveform Ra from a received and digitized signal waveform Rb, extracting the reflected signal from the microstructure of the welding area and amplifying only the extracted reflected signal, and by using the extracted reflected signal, superimposing a plurality of images (B1, B2, ...Bn) obtained by scanning at the plurality of positions in the welding direction, and retaining a maximal value of superimposed pixels to generate an output image:

$$B(x,y) = Max\{Bs(x,y); s=1\sim n\}$$

where n is the number of images obtained by scanning at the plurality of positions (P1, P2, ...Pn) in the welding direction, and a brightness value at a given position (x,y) in image Bn is expressed as Bn(x,y), where x is a position in the cross direction (C) and y is a position in the depth direction.

2. The method for imaging the welding area according to claim 1, wherein in said subtracting the moving average waveform Ra is subtracted at an average score m from the received and digitized signal waveform Rb, the average score m being expressed as Pt x Sp (points), where Pt (seconds) is a length of one wavelength of a frequency to be extracted, and Sp (Hz) is a sampling frequency for discretization.

3. An apparatus for imaging a welding area (2), the apparatus being configured to scan a cross section of a test object (S) in a cross direction (C) orthogonal to a welding direction (L) with an ultrasonic beam (B), receive a reflected signal from the inside of the test object (S) while the cross section is being scanned, and image the scanned cross section on the basis of the received reflected signal to inspect a microstructure of the welding area (2), the apparatus comprising:

means (11) for enhancing a reflected wave from the microstructure of the welding area (2) by scanning a cross section of the test object (S) orthogonal to the welding direction (L) with a focused ultrasonic beam (B) at a plurality of different positions (P1, P2, .. Pn) in the welding direction, and imaging the scanned cross sections on the basis of the resulting ultrasonic received signals,

**characterised in that**:

the means (11) for enhancing are arranged to enhance the reflected wave from the microstructure of the welding area by subtracting a moving average waveform Ra from a received and digitized signal waveform Rb, extracting the reflected signal from the microstructure of the welding area and amplifying only the extracted reflected signal, and to use the extracted reflected signal to superimpose a plurality of images (B1, B2, .. Bn) obtained by scanning at the plurality of positions in the welding direction (L), and retain a maximal value of superimposed pixels to generate an output image:

$$B(x,y) = Max\{Bs(x,y); s=1\sim n\}$$

where n is the number of images obtained by scanning at the plurality of positions in the welding direction (L), and a brightness value at a given position (x,y) in image Bn is expressed as Bn(x,y), where x is a position in the cross direction (C) and y is a position in the depth direction.

4. The apparatus for imaging the welding area according to claim 3, wherein in said subtracting the moving average waveform Ra is subtracted at an average score m from the received and digitized signal waveform Rb, the average score m being expressed as Pt × Sp (points), where Pt (seconds) is a length of one wavelength of a frequency to be extracted, and Sp (Hz) is a sampling frequency for discretization.

**Patentansprüche**

1. Verfahren zum Abbilden eines Schweißbereichs (2), das Verfahren Folgendes umfassend:

   Scannen eines Querschnitts eines Testobjekts (S) in einer Querrichtung (C) orthogonal zu einer Schweißrichtung (L) mit einem Ultraschallstrahl (B) und Empfangen eines reflektierten Signals aus dem Inneren des Testobjekts (S), während der Querschnitt gescannt wird; und
   Abbilden des gescannten Querschnitts auf der Grundlage des empfangenen reflektierten Signals, um eine Mikrostruktur des Schweißbereichs (2) zu prüfen,
   wobei eine reflektierte Welle aus der Mikrostruktur des Schweißbereichs (2) durch Scannen eines Querschnitts des Testobjekts (S) orthogonal zu der Schweißrichtung (L) mit einem konzentrierten Ultraschallstrahl (B) an mehreren verschiedenen Positionen (P1, P2, ...Pn) in der Schweißrichtung (L) verbessert wird, und Abbilden der gescannten Querschnitte auf der Grundlage der resultierenden empfangenen Ultraschallsignale,
   bei dem Abbilden **gekennzeichnet durch** Verbessern der reflektierten Welle aus der Mikrostruktur des Schweißbereichs durch Subtrahieren eines gleitenden Durchschnitts einer Wellenform Ra von einer empfangenen und digitalisierten Signalwellenform Rb, wobei das reflektierte Signal aus der Mikrostruktur des Schweißbereichs extrahiert wird und nur das extrahierte reflektierte Signal verstärkt wird, und, durch Verwenden des extrahierten reflektierten Signals, Überlagern mehrerer Bilder (B1, B2, ...Bn), welche durch Scannen an den mehreren Positionen in der Schweißrichtung erhalten werden, und Festhalten eines maximalen Werts der überlagerten Pixel, um ein Ausgabebild zu erzeugen:

   $$B(x, y) = \text{Max}\{Bs(x, y); s=1\sim n\}$$

   wobei n die Anzahl Bilder ist, welche durch Scannen an den mehreren Positionen (P1, P2, ...Pn) in der Schweißrichtung erhalten werden, und ein Helligkeitswert an einer gegebenen Position (x, y) in einem Bild Bn als Bn(x, y) ausgedrückt wird, wobei x eine Position in der Querrichtung (C) ist und y eine Position in der Tiefenrichtung ist.

2. Verfahren zum Abbilden des Schweißbereichs nach Anspruch 1, wobei bei dem Subtrahieren der gleitende Durchschnitt einer Wellenform Ra an einem durchschnittlichen Punktwert m von der empfangenen und digitalisierten Signalwellenform Rb subtrahiert wird, wobei der durchschnittliche Punktwert m als Pt x Sp (Punkte) ausgedrückt wird, wobei Pt (Sekunden) eine Länge einer Wellenlänge einer Frequenz ist, welche extrahiert werden soll, und Sp (Hz) eine Abtastfrequenz zur Diskretisierung ist.

3. Vorrichtung zum Abbilden eines Schweißbereichs (2), wobei die Vorrichtung konfiguriert ist, einen Querschnitt eines Testobjekts (S) in einer Querrichtung (C) orthogonal zu einer Schweißrichtung (L) mit einem Ultraschallstrahl (B) zu scannen, ein reflektiertes Signal aus dem Inneren des Testobjekts (S) zu empfangen, während der Querschnitt gescannt wird, und den gescannten Querschnitt auf der Grundlage des empfangenen reflektierten Signals abzubilden, um eine Mikrostruktur des Schweißbereichs (2) zu prüfen, die Vorrichtung Folgendes umfassend:

   Mittel (11) zum Verbessern einer reflektierten Welle aus der Mikrostruktur des Schweißbereichs (2) durch Scannen eines Querschnitts des Testobjekts (S) orthogonal zu der Schweißrichtung (L) mit einem konzentrierten Ultraschallstrahl (B) an mehreren verschiedenen Positionen (P1, P2, ...Pn) in der Schweißrichtung und zum Abbilden der gescannten Querschnitte auf der Grundlage der resultierenden empfangenen Ultraschallsignale, **dadurch gekennzeichnet, dass**:

   die Mittel (11) zum Verbessern angeordnet sind, um die reflektierte Welle aus der Mikrostruktur des Schweißbereichs durch Subtrahieren eines gleitenden Durchschnitts einer Wellenform Ra von einer empfangenen und digitalisierten Signalwellenform Rb zu verbessern, wobei das reflektierte Signal aus der Mikrostruktur des Schweißbereichs extrahiert wird und nur das extrahierte reflektierte Signal verstärkt wird, und um das extrahierte reflektierte Signal zu verwenden, um mehrere Bilder (B1, B2, ...Bn) zu überlagern, welche durch Scannen an den mehreren Positionen in der Schweißrichtung (L) erhalten werden, und um einen maximalen Wert der überlagerten Pixel festzuhalten, um ein Ausgabebild zu erzeugen:

   $$B(x, y) = \text{Max}\{Bs(x, y); s=1\sim n\}$$

wobei n die Anzahl Bilder ist, welche durch Scannen an den mehreren Positionen in der Schweißrichtung (L) erhalten werden, und ein Helligkeitswert an einer gegebenen Position (x, y) in einem Bild Bn als Bn(x, y) ausgedrückt wird, wobei x eine Position in der Querrichtung (C) ist und y eine Position in der Tiefenrichtung ist.

**4.** Vorrichtung zum Abbilden des Schweißbereichs nach Anspruch 3, wobei bei dem Subtrahieren der gleitende Durchschnitt einer Wellenform Ra an einem durchschnittlichen Punktwert m von der empfangenen und digitalisierten Signalwellenform Rb subtrahiert wird, wobei der durchschnittliche Punktwert m als Pt x Sp (Punkte) ausgedrückt wird, wobei Pt (Sekunden) eine Länge einer Wellenlänge einer Frequenz ist, welche extrahiert werden soll, und Sp (Hz) eine Abtastfrequenz zur Diskretisierung ist.

**Revendications**

**1.** Procédé pour imager une zone de soudage (2), le procédé comprenant les étapes consistant à :

balayer une section transversale d'un objet de test (S) dans une direction transversale (C) orthogonale à une direction de soudage (L) avec un faisceau ultrasonore (B), et recevoir un signal réfléchi à partir de l'intérieur de l'objet de test (S) pendant que la section transversale est balayée ; et

imager la section transversale balayée sur la base du signal réfléchi reçu pour inspecter une microstructure de la zone de soudage (2),

dans lequel une onde réfléchie à partir de la microstructure de la zone de soudage (2) est améliorée en balayant une section transversale de l'objet de test (S) orthogonale à la direction de soudage (L) avec un faisceau ultrasonore focalisé (B) au niveau d'une pluralité de positions différentes (P1, P2, ... Pn) dans la direction de soudage (L), et imager les sections transversales balayées sur la base des signaux ultrasonores reçus résultants, **caractérisé par**, dans l'étape d'imagerie, l'amélioration de l'onde réfléchie à partir de la microstructure de la zone de soudage en soustrayant une forme d'onde moyenne mobile Ra à partir d'une forme d'onde de signal reçu et numérisé Rb, en extrayant le signal réfléchi à partir de la microstructure de la zone de soudage et en amplifiant uniquement le signal réfléchi extrait, et en utilisant le signal réfléchi extrait, la superposition d'une pluralité d'images (B1, B2, ... Bn) obtenues en balayant au niveau de la pluralité de positions dans la direction de soudage, et la retenue d'une valeur maximale de pixels superposés pour générer une image de sortie :

$$B\ (x,y) = \mathrm{Max}\{\mathrm{Bs}(x,y)\ ;\ s = 1{\sim}n\}$$

où n est le nombre d'images obtenues par balayage au niveau de la pluralité de positions (P1, P2, ... Pn) dans la direction de soudage, et une valeur de luminosité au niveau d'une position donnée (x,y) dans l'image Bn est exprimée par Bn(x,y), où x est une position dans la direction transversale (C) et y est une position dans la direction de la profondeur.

**2.** Procédé pour imager la zone de soudage selon la revendication 1, dans lequel dans ladite soustraction, la forme d'onde moyenne mobile Ra est soustraite, au niveau d'un score moyen m, de la forme d'onde de signal reçu et numérisé Rb, le score moyen m étant exprimé par Pt x Sp (points), où Pt (secondes) est une longueur d'une longueur d'onde d'une fréquence à extraire, et Sp (Hz) est une fréquence d'échantillonnage pour la discrétisation.

**3.** Appareil pour imager une zone de soudage (2), l'appareil étant configuré pour balayer une section transversale d'un objet de test (S) dans une direction transversale (C) orthogonale à une direction de soudage (L) avec un faisceau ultrasonore (B), recevoir un signal réfléchi à partir de l'intérieur de l'objet de test (S) pendant que la section transversale est balayée ; et imager la section transversale balayée sur la base du signal réfléchi reçu pour inspecter une microstructure de la zone de soudage (2), l'appareil comprenant :

des moyens (11) pour améliorer une onde réfléchie à partir de la microstructure de la zone de soudage (2) en balayant une section transversale de l'objet de test (S) orthogonale à la direction de soudage (L) avec un faisceau ultrasonore focalisé (B) au niveau d'une pluralité de différentes positions (P1, P2, ... Pn) dans la direction de soudage, et en imageant les sections transversales balayées sur la base des signaux ultrasonores reçus résultants,

**caractérisé en ce que** :

les moyens (11) pour améliorer sont agencés pour améliorer l'onde réfléchie à partir de la microstructure de la zone de soudage en soustrayant une forme d'onde moyenne mobile Ra à partir d'une forme d'onde de signal reçu et numérisé Rb, en extrayant le signal réfléchi à partir de la microstructure de la zone de soudage et en amplifiant uniquement le signal réfléchi extrait, et pour utiliser le signal réfléchi extrait pour superposer une pluralité d'images (B1, B2, ... Bn) obtenues en balayant au niveau de la pluralité de positions dans la direction de soudage (L), et retenir une valeur maximale de pixels superposés pour générer une image de sortie :

$$B\ (x,y)\ =\ Max\{Bs(x,y)\ ;\ s=\ 1\sim n\}$$

où n est le nombre d'images obtenues par balayage au niveau de la pluralité de positions (P1, P2, ... Pn) dans la direction de soudage (L), et une valeur de luminosité au niveau d'une position donnée (x,y) dans l'image Bn est exprimée par Bn(x,y), où x est une position dans la direction transversale (C) et y est une position dans la direction de la profondeur.

4. Appareil pour imager la zone de soudage selon la revendication 3, dans lequel durant ladite soustraction, la forme d'onde moyenne mobile Ra est soustraite au niveau d'un score moyen m de la forme d'onde de signal reçu et numérisé Rb, le score moyen m étant exprimé par Pt x Sp (points), où Pt (secondes) est une longueur d'une longueur d'onde d'une fréquence à extraire, et Sp (Hz) est une fréquence d'échantillonnage pour la discrétisation.

# FIG. 1

SCAN POSITION   Pn

SCAN POSITION   P2

SCAN POSITION   P2

SCAN POSITION   P1

LONGITUDINAL
(L) DIRECTION

CROSS
(C) DIRECTION

1 (BASE MATERIAL)

EP 3 054 291 B1

# FIG. 2

# FIG. 3

ACCELERATION/DECELERATION CHART OF
C-DIRECTION SCANNING MEANS

# FIG. 4

(A)

(B)

BASE
MATERIAL

WELDING
AREA

LOW FREQUENCY,
LARGE BEAM DIAMETER

VARIATIONS IN ACOUSTIC VELOCITY
DEPENDING ON GRAIN
ORIENTATION ARE AVERAGED OUT

⬇

NO REFLECTION AT
BOUNDING SURFACE

HIGH FREQUENCY,
SMALL BEAM DIAMETER

VARIATIONS IN ACOUSTIC
VELOCITY ARE LESS AVERAGED

⬇

SLIGHT DIFFERENCE IN
ACOUSTIC IMPEDANCE

⬇

GENERATION OF REFLECTED
WAVE AT BOUNDING SURFACE

# FIG. 5

▼ SIGNAL WAVEFORM
TO BE ENHANCED

(a) RECEIVED WAVEFORM Rb

CANCELLED OUT

(b) MOVING AVERAGE
WAVEFORM Ra
(= BASE NOISE)

(c) MOVING-AVERAGE
SUBTRACTED
WAVEFORM Rb−Ra

# FIG. 6

(A)

ULTRASONIC
TAILING OF S-ECHO

ECHO INSIDE
PROBE

DEPTH
DIRECTION

→ C-DIRECTION

(B)

STRUCTURE
OF WELDING
AREA

DEPTH
DIRECTION

→ C-DIRECTION

# FIG. 7

DEPTH
DIRECTION

→ C-DIRECTION

# FIG. 8

⋮

```
        ┌───────────────┐
        │      10       │
        └───────────────┘
                                                              11
┌───────────┐   ┌───────────────────────────────────────────────────┐
│    16     │──▶│   ┌───────────────┐                                 │
└───────────┘   │   │      17       │                                 │
                │   └───────────────┘                                 │
```

| WAVEFORM DATA AT POSITION P1 | WAVEFORM DATA AT POSITION P2 | WAVEFORM DATA AT POSITION P3 | WAVEFORM DATA AT POSITION Pn |
|---|---|---|---|
| MEMORY M1 | MEMORY M2 | MEMORY M3 ... | MEMORY Mn |

|  18  |
|---|

| IMAGE B1 | IMAGE B2 | IMAGE B3 | IMAGE Bn |
|---|---|---|---|

|  19  |
|---|

OUTPUT IMAGE Bout

TO 12

# FIG. 9

POSITION D1 D2 Dm

3

SCANNING

1

POSITION Ps

B

2

RECEIVED WAVEFORM

PROPAGATION TIME

AMPLITUDE AMPLITUDE AMPLITUDE

DATA POINTS Sd IN DISCRETIZATION

D1 D2 Dm

C-DIRECTION

PREPROCESSING

SUBTRACTION OF MOVING AVERAGE WAVEFORM, FILTERING, ETC.

MEMORY $M_s$

BRIGHTNESS CONVERSION

IMAGE DATA

$Ms(x, t)$
x: D1 TO Dm
t: 1 TO Sd

IMAGE DATA $Bs(x, y)$

DEPTH DIRECTION

C-DIRECTION

EP 3 054 291 B1

# FIG. 10

(A)

SIGNAL
AMPLITUDE (%)

PROPAGATION TIME (μsec)

(A) EXAMPLE OF ULTRASONIC RECEIVED SIGNAL

(B)

SIGNAL
AMPLITUDE (%)

PROPAGATION TIME (μsec)

(B) EXAMPLE OF FULL-WAVE RECTIFIED
ULTRASONIC RECEIVED SIGNAL

FIG. 11

FIG. 12

# FIG. 13

EP 3 054 291 B1

# FIG. 14

ELECTRONIC SCANNING IN THICKNESS DIRECTION (0.5 mm PITCH)

B

MECHANICAL SCANNING IN DIRECTION PERPENDICULAR TO PIPE AXIS (0.1 mm PITCH)

30 (ARRAY PROBE)

DIRECTION PERPENDICULAR TO PIPE AXIS

THICKNESS DIRECTION

S { 1, 2 }

TRANSMIT RECEIVE    TRANSMIT RECEIVE    TRANSMIT RECEIVE    TRANSMIT RECEIVE

10 mm

EP 3 054 291 B1

# FIG. 15

EXAMPLE OF MACROPHOTOGRAPHY OF UOE STEEL PIPE WELD

10 mm

BOUNDARY BETWEEN WELDING AREA AND BASE MATERIAL

CENTER OF WELDING AREA

BOUNDARY BETWEEN WELDING AREA AND BASE MATERIAL

S
1  2

10 mm PITCH

MAXIMAL VALUE EXTRACTION AND SYNTHESIS PROCESSING

SYNTHESIZED AT 10 POINTS

10 mm

EP 3 054 291 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11101760 A
- JP 2008111742 A
- JP 2007085949 A
- US 2008058643 A1
- EP 0834835 A2